# FASCICULE DE BREVET EUROPEEN

(11) **EP 4 426 590 B1**
(45) Date de publication et mention de la délivrance du brevet: **18.06.2025**
(21) Numéro de dépôt: 22802205.9
(22) Date de dépôt: 11.10.2022
(51) Int. Cl.: B60R 19/24, B60R 19/18

(54) **SOUS-ENSEMBLE STRUCTUREL DE PARE-CHOCS COMPORTANT UN RENFORT DE PARE-CHOCS ET DEUX ÉQUERRES DE FIXATION LATÉRALES**
STRUKTURELLE UNTERANORDNUNG EINES STOSSFÄNGERS MIT EINER STOSSFÄNGERVERSTÄRKUNG UND ZWEI SEITLICHEN MONTAGEKONSOLEN
STRUCTURAL SUB-ASSEMBLY OF A BUMPER COMPRISING A BUMPER REINFORCEMENT AND TWO SIDE MOUNTING BRACKETS

(30) Priorité: 05.11.2021 FR 2111773
(43) Date de publication de la demande: 11.09.2024
(73) Titulaire: Stellantis Auto SAS, 78300 Poissy (FR)
(72) Inventeur: PERON, Rodolphe, 95220 HERBLAY (FR); BOUDAN, Julien, 91210 DRAVEIL (FR); ROYER, Guillaume, 91680 BRUYERES LE CHATEL (FR)
(74) Mandataire: BCIP
(86) Numéro de dépôt international: PCT/FR2022/051907
(87) Numéro de publication internationale: WO 2023/079223

(56) Documents cités:
- EP-A2- 2 266 865
- FR-A1- 3 063 262
- FR-A1- 3 066 162
- FR-A1- 3 104 509

## Description

### [Domaine technique]

La présente invention concerne d'une manière générale la problématique de la fixation de la fixation d'un pare-chocs de véhicule automobile ou d'une armature support d'un tel pare-chocs sur la poutre d'un renfort de pare-chocs. Elle vise en particulier un sous-ensemble structurel de pare-chocs comportant un renfort de pare-chocs et au moins une équerre de fixation.

### [Technique antérieure]

Dans le cadre de la sécurité passive qui a trait à l'ensemble des moyens et des actions mises en œuvre pour diminuer les conséquences d'un accident, la face avant des véhicules doit satisfaire à une réglementation très stricte en cas de chocs frontaux visant à assurer la protection des occupants du véhicule tout en limitant l'agressivité de ce véhicule vis-à-vis des autres usagers de la route et notamment des piétons afin de réduire les risques de blessures graves au niveau des jambes de ces piétons.

Les constructeurs automobiles doivent également tenir compte d'autres préoccupations telles que les exigences de style et la maîtrise des coûts de réparation du véhicule lors de chocs à faible vitesse.

Pour répondre favorablement à l'ensemble de ces contraintes, les véhicules automobiles sont équipés en partie avant d'au moins un renfort de pare-chocs.

Désigné également couramment par l'acronyme SAS (pour « Système d'Absorption de Chocs »), un tel renfort de pare-chocs comporte classiquement une poutre métallique creuse s'étendant transversalement ainsi que deux absorbeurs latéraux métalliques solidaires chacun d'une portion d'extrémité latérale correspondante de la poutre et destinés à être fixées soit aux extrémités avant des brancards avant (pour les renforts de pare-chocs voie haute) soit aux extrémités avant des prolonges de berceau (pour les renforts de pare-chocs voie basse).

Ces absorbeurs latéraux (désignés couramment sous leur dénomination anglaise « crashboxes » sont conçus pour pouvoir se déformer en formant des plis à la manière d'un accordéon de sorte à dissiper tout ou partie de l'énergie du choc entre le véhicule et un élément qui lui est externe.

Des équerres de fixation latérales sont classiquement rapportées fixement sur les deux portions latérales de la poutre de ce renfort de pare-chocs afin de permettre d'y solidariser par vissage l'armature support du pare-chocs (ou directement le pare-chocs) ainsi que les projecteurs avant du véhicule.

Ces équerres latérales sont généralement montées et réglées en usine pour assurer les jeux et affleurements des éléments de la face avant du véhicule.

Une telle équerre de fixation latérale comprend classiquement une première paroi verticale destinée à être fixée contre une portion latérale correspondante de la face avant de la poutre, ainsi qu'une seconde paroi horizontale s'étendant depuis le bord supérieur de la première paroi perpendiculairement à cette dernière, cette seconde paroi étant destinée à venir en surplomb de la poutre et comprenant au moins un orifice de sorte à permettre la fixation par vissage de l'armature support du pare-chocs (ou directement du pare-chocs) ainsi que d'un projecteur avant du véhicule.

La première paroi verticale présente deux trous verticaux oblongs permettant un pré-montage de l'équerre au moyen de deux vis les traversant et venant se visser partiellement dans des écrous sertis dans des orifices circulaires ménagés sur la poutre de sorte à laisser un certain débattement vertical de l'équerre avant sa fixation définitive par le vissage complet de ces vis.

Cette multiplication du nombre de vis de fixation rend les opérations de montage relativement longues et complexes.

Afin de permettre une fixation simplifiée et plus rapide, le document FR 3 063 262 A1 propose une équerre de fixation latérale dont la première paroi verticale comporte un unique trou vertical oblong, cette équerre comportant en outre deux languettes saillant horizontalement depuis cette première paroi au dessus dudit trou et du même côté que la seconde paroi.

Ces deux languettes sont agencées de sorte à venir reposer sur le dessus de la poutre après le pré-montage de l'équerre de sorte à empêcher toute rotation de cette équerre autour d'un axe longitudinal avant sa fixation définitive.

Un tel agencement, qui correspond au préambule de la revendication 1, a cependant pour inconvénient de limiter les possibilités de réglage vertical de l'équerre de fixation latérale après son pré-montage car les languettes reposant sur le dessus de la poutre empêchent son abaissement.

La seconde paroi horizontale demeure ainsi toujours à l'écart du dessus de la poutre, ce qui peut empêcher d'assurer par la suite la fixation du projecteur sur cette dernière.

### [Exposé de l'invention]

La présente invention vise donc à améliorer la situation.

Elle propose à cet effet un sous-ensemble structurel de pare-chocs pour véhicule automobile comportant un renfort de pare-chocs comprenant une poutre et deux équerres de fixation latérales comportant chacune une première paroi verticale rapportée contre la face avant d'une portion latérale correspondante de ladite poutre ainsi qu'une seconde paroi horizontale s'étendant depuis le bord supérieur de ladite première paroi verticale en surplomb de ladite poutre, ladite première paroi verticale présentant un trou vertical oblong positionné en regard d'un orifice circulaire respectif ménagé sur une dite portion latérale correspondante de ladite poutre, ledit trou vertical oblong et ledit orifice circulaire étant traversés par une vis partiellement vissée dans un écrou de sorte à assurer le pré-maintien de ladite équerre de fixation latérale contre ladite poutre tout en permettant de laisser un certain débattement vertical de cette équerre de fixation latérale avant sa fixation définitive par le vissage complet de ladite vis, chaque dite équerre de fixation latérale comportant également un élément saillant depuis ladite première paroi verticale du même côté que ladite seconde paroi horizontale ;
caractérisé en ce que ledit élément saillant de chaque équerre de fixation latérale traverse une lumière verticale oblongue respective ménagée sur une dite portion latérale correspondante de la poutre à proximité d'un dit orifice circulaire.

L'invention permet d'éviter toute rotation des équerres de fixation latérales pré-montées tout en améliorant leurs possibilités de réglage vertical en permettant notamment de positionner leur seconde paroi horizontale au plus près de la poutre de sorte à permettre d'assurer la fixation des projecteurs latéraux sur ces équerres.

Selon des caractéristiques préférées dudit sous-ensemble structurel selon l'invention :
- le trou vertical oblong de chaque dite équerre de fixation latérale et la lumière verticale oblongue ménagée dans la portion latérale correspondante de ladite poutre s'étendent sur une hauteur identique, ces derniers étant en outre configurés de sorte que l'arrivée en butée basse (respectivement haute) d'une dite vis contre le bord inférieur (respectivement supérieur) dudit trou corresponde à l'arrivée en butée basse (respectivement haute) dudit élément saillant contre le bord inférieur (respectivement supérieur) de ladite lumière ;
- ladite hauteur est comprise entre 15 et 25 mm ;
- ledit élément saillant est constitué par une languette ;
- ladite lumière oblongue ménagée dans chaque portion latérale de ladite poutre présente une largeur supérieure de 1 à 2 mm par rapport à celle de la languette d'une dite équerre de fixation latérale ;
- ladite languette de chaque dite équerre de fixation latérale est réalisée par découpe et pliage dans sa première paroi verticale ;
- ladite languette et ledit trou vertical oblong de chaque dite équerre de fixation latérale sont décalés latéralement l'un de l'autre ;
- la première paroi verticale de chaque dite équerrre de fixation latérale comporte au moins une nervure de rigidification s'étendant verticalement sur l'ensemble de sa hauteur ; et/ou
- ledit sous-ensemble structurel comporte une équerre de fixation centrale comportant une première paroi verticale rapportée contre la face avant de la portion centrale de ladite poutre ainsi qu'une seconde paroi horizontale s'étendant depuis le bord supérieur de ladite première paroi verticale en surplomb de ladite poutre, ladite première paroi verticale de cette équerre de fixation centrale présentant un trou vertical oblong positionné en regard d'un orifice circulaire respectif ménagé sur la portion centrale de ladite poutre, ledit trou vertical oblong et ledit orifice circulaire étant traversés par une vis partiellement vissée dans un écrou de sorte à assurer le pré-maintien de ladite équerre de fixation centrale contre ladite poutre tout en permettant de laisser un certain débattement vertical de cette équerre de fixation centrale avant sa fixation définitive par le vissage complet de ladite vis, ladite équerre de fixation centrale comportant également deux languettes saillant horizontalement depuis ladite première paroi verticale du même côté que ladite seconde paroi horizontale et reposant sur le dessus de ladite poutre.

L'invention vise également sous un second aspect, un véhicule automobile comportant un tel sous-ensemble structurel de pare-chocs.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue en perspective de trois quart avant d'un sous-ensemble structurel de pare-chocs selon l'invention ;
[Fig 2] est un agrandissement d'une zone latérale de la poutre du renfort de pare-chocs du sous-ensemble de la figure 1, sur laquelle vient se monter une équerre de fixation latérale ;
[Fig 3] représente une vue en perspective de trois quart arrière d'une équerre de fixation latérale du sous-ensemble de la figure 1 ;
[Fig 4] est une illustration du débattement vertical possible de l'équerre de fixation latérale de la figure 3 après son pré-montage sur la poutre ; et
[Fig 5] représente une vue en perspective de trois quart arrière de l'équerre de fixation centrale du sous-ensemble de la figure 1.

### [Description détaillée]

On définit par rapport au véhicule un repère orthogonal XYZ comprenant trois axes perpendiculaires deux à deux, à savoir :
- un axe X, définissant une direction longitudinale, horizontale, confondue avec la direction générale de déplacement du véhicule ;
- un axe Y, définissant une direction transversale, horizontale, qui avec l'axe X définit un plan XY horizontal, et
- un axe Z, définissant une direction verticale, perpendiculaire au plan XY horizontal.

Dans la description qui va suivre et par convention, les termes « avant » et « arrière » seront utilisés pour définir la position relative d'un élément par rapport à un autre selon la direction générale de déplacement du véhicule.

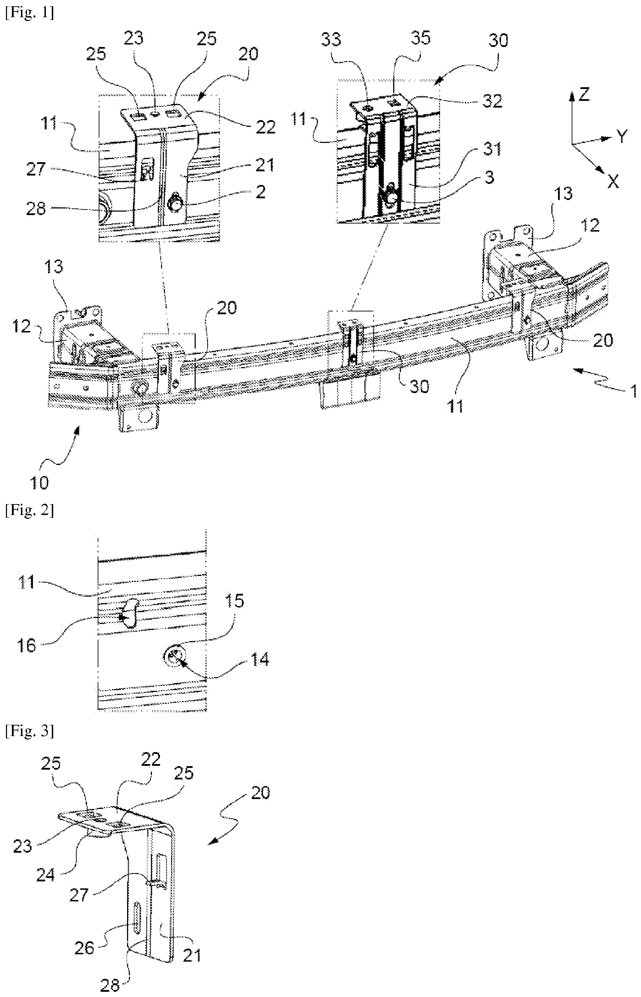

La figure 1 représente un sous-ensemble structurel de pare-chocs avant 1 pour véhicule automobile selon l'invention comportant un renfort de pare-chocs de type voie basse 10, prévu pour être rapporté sur les extrémités avant des prolonges latérales de berceau de la structure du véhicule.

Ce renfort de pare-chocs 10 comporte une poutre métallique creuse 11 s'étendant suivant une direction sensiblement transversale, ainsi que deux absorbeurs latéraux métalliques 12 solidaires chacun d'une portion d'extrémité latérale correspondante de la poutre 11, ces absorbeurs 12 étant destinés à être fixées aux extrémités avant des deux prolonges latérales de berceau non représentées de la structure du véhicule automobile.

Obtenue classiquement par formage ou extrusion, la poutre 11 est prévue pour transmettre aux absorbeurs latéraux 12 les efforts subis lors d'un choc avec l'avant du véhicule. Elle peut comporter des plaques métalliques internes de renfort s'étendant transversalement et destinées à améliorer sa tenue mécanique.

Dotés d'une rigidité mécanique inférieure à celles de la poutre 11 et des prolonges latérales de berceau du véhicule, les deux absorbeurs latéraux (ou « crashboxes » selon la dénomination anglaise) 12 sont prévus, en cas de survenance d'un choc réparabilité, pour s'écraser et ainsi absorber l'énergie de ce choc de sorte à éviter toute détérioration de ces prolonges latérales de berceau.

Tel qu'illustré sur la figure 1, le renfort de pare-chocs 10 comporte également deux platines d'interface 13 fixées rigidement chacune à l'extrémité arrière d'un absorbeur latéral respectif 12 et prévues pour coopérer avec deux autres platines d'interface correspondantes fixées aux extrémités avant des deux prolonges latérales de berceau de la structure du véhicule automobile.

Le sous-ensemble structurel de pare-chocs avant 1 comporte également deux équerres de fixation latérales 20 réalisées chacune par pliage à partir d'une feuille de tôle métallique (avantageusement dans un alliage d'aluminium) préalablement découpée et destinées à être fixées sur les deux portions latérales de la poutre 11 de ce renfort de pare-chocs 10 afin de permettre d'y solidariser par vissage l'armature support du pare-chocs (ou directement le pare-chocs) ainsi que les projecteurs avant du véhicule.

En référence aux figures 1 et 3, chaque équerre de fixation latérale 20 comporte une première paroi verticale 21 rapportée contre la face avant d'une portion latérale correspondante de la poutre 11, ainsi qu'une seconde paroi horizontale 22 s'étendant depuis le bord supérieur de la première paroi verticale 21 perpendiculairement à cette dernière.

S'étendant en surplomb de la poutre 11, cette seconde paroi horizontale 22 comprend dans sa zone centrale un orifice circulaire 23 sur le pourtour duquel est implanté un écrou 24, de sorte à permettre la fixation par vissage de l'armature support du pare-chocs (ou directement du pare-chocs) ainsi que d'un projecteur avant du véhicule.

Cette seconde paroi horizontale 22 comprend également de manière avantageuse au moins un orifice rectangulaire 25 prévu pour être traversé par un pion d'indexage issu de l'armature support du pare-chocs (ou directement du pare-chocs) ou du projecteur avant du véhicule de sorte à assurer son pré-maintien.

Afin d'utiliser la même référence d'équerre de fixation latérale sur les deux côtés de la poutre 11 tout en assurant un pré-maintien symétrique, la seconde paroi horizontale 22 présente de préférence deux orifices rectangulaires 25 agencés latéralement de part et d'autre et de manière symétrique vis-à-vis de l'orifice circulaire 23.

La première paroi verticale 21 présente, dans sa partie inférieure, un trou vertical oblong 26 positionné en regard d'un orifice circulaire respectif 14 ménagé sur une portion latérale correspondante de la poutre 11 et sur le pourtour duquel est implanté un écrou serti 15 (voir figure 2).

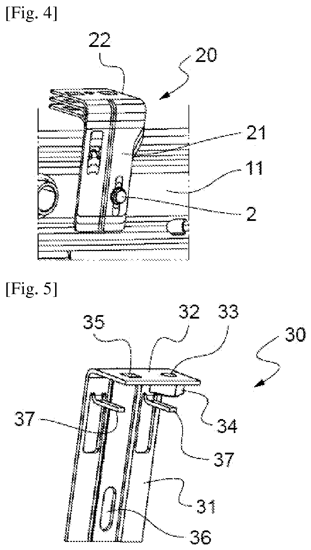

Une vis 2 traversant ce trou oblong 26 ainsi que cet orifice circulaire 14 et étant vissée partiellement dans l'écrou 15 assure le pré-maintien de l'équerre de fixation latérale 20 contre la poutre 11 tout en permettant de laisser un certain débattement vertical de cette équerre 20 avant sa fixation définitive par le vissage complet de cette vis 2, tel qu'illustré sur la figure 4.

Chaque équerre de fixation latérale 20 comporte également une languette 27 saillant horizontalement depuis la première paroi verticale 21 au dessus du niveau du trou oblong 26 et du même côté que la seconde paroi horizontale 22.

Réalisée par découpe et pliage de la portion de tôle constituant la première paroi verticale 21, cette languette 27, dont la largeur est avantageusement comprise entre 5 et 7 mm, traverse une lumière verticale oblongue respective 16 ménagée sur une portion latérale correspondante de la poutre 11 à proximité d'un orifice circulaire 14 (voir figure 2).

La coopération entre cette languette 27 et les bords latéraux de cette lumière 16 permet ainsi d'empêcher tout mouvement de rotation de l'équerre 20 autour de l'axe longitudinal de la vis 2.

On remarquera que la languette 27 et le trou vertical oblong 26 ménagés sur la première paroi verticale 21 sont avantageusement décalés latéralement l'un de l'autre afin de répartir l'affaiblissement mécanique.

De manière préférentielle et afin de ne pas limiter le débattement vertical des équerres de fixation latérales 20 avant leur fixation définitive par le vissage complet des vis 2, le trou vertical oblong 26 de chaque équerre 20 et la lumière verticale oblongue 16 ménagé dans la portion latérale correspondante de la poutre 11 s'étendent sur une hauteur identique comprise de préférence entre 15 et 25 mm, ces derniers étant en outre configurés de sorte que l'arrivée en butée basse (respectivement haute) de la vis 2 contre le bord inférieur (respectivement supérieur) du trou 26 corresponde à l'arrivée en butée basse (respectivement haute) de la languette 27 contre le bord inférieur (respectivement supérieur) de la lumière16.

Afin d'absorber les dispersions dimensionnelles dues aux tolérances normales de fabrication des différentes pièces, la lumière oblongue 16 ménagée dans chaque portion latérale de la poutre 11 présente une largeur légèrement supérieure par rapport à celle de la languette 27 d'une équerre de fixation latérale 20, cette différence de largeur étant par exemple comprise entre 1 et 2 mm.

Afin d'améliorer sa résistance mécanique à la torsion, la première paroi verticale 21 comporte avantageusement au moins une nervure de rigidification 28 s'étendant verticalement sur l'ensemble de sa hauteur, de préférence entre la languette 27 et le trou vertical oblong 26.

Selon des variantes de réalisation non représentées, la languette anti-rotation de chaque équerre de fixation latérale peut être remplacée par un bossage saillant depuis la première paroi verticale du même côté que la seconde paroi horizontale et traversant une lumière verticale oblongue ménagée sur une portion latérale correspondante de la poutre.

Le sous-ensemble structurel de pare-chocs avant 1 peut comporter également une équerre de fixation centrale 30 réalisée par pliage à partir d'une feuille de tôle métallique (avantageusement dans un alliage d'aluminium) préalablement découpée et destinée à être fixée sur la portion centrale de la poutre 11 de ce renfort de pare-chocs 10 afin de permettre d'y solidariser par vissage l'armature support du pare-chocs (ou directement le pare-chocs) afin d'éviter son affaiblissement lorsque sa masse est importante (cas des véhicules présentant par exemple une largeur supérieure à la moyenne).

En référence aux figures 1 et 5, cette équerre de fixation centrale 30 comporte une première paroi verticale 31 rapportée contre la face avant de la portion centrale de la poutre 11, ainsi qu'une seconde paroi horizontale 32 s'étendant depuis le bord supérieur de la première paroi verticale 31 perpendiculairement à cette dernière.

S'étendant en surplomb de la poutre 11, cette seconde paroi horizontale 32 comprend un orifice circulaire 33 sur le pourtour duquel est implanté un écrou 34, de sorte à permettre la fixation par vissage de l'armature support du pare-chocs (ou directement du pare-chocs).

Cette seconde paroi horizontale 32 comprend également de manière avantageuse au moins un orifice rectangulaire 35 prévu pour être traversé par un pion d'indexage issu de l'armature support du pare-chocs (ou directement du pare-chocs) du véhicule de sorte à assurer son pré-maintien.

La première paroi verticale 31 présente, dans sa partie inférieure, un trou vertical oblong 36 positionné en regard d'un orifice circulaire respectif (non visible) ménagé sur la portion centrale de la poutre 11 et sur le pourtour duquel est implanté un écrou serti (également non visible).

Une vis 3 traversant ce trou oblong 36 ainsi que cet orifice circulaire et étant vissée partiellement dans cet écrou assure le pré-maintien de l'équerre de fixation centrale 30 contre la poutre 11 tout en permettant de laisser un certain débattement vertical de cette équerre 30 avant sa fixation définitive par le vissage complet de cette vis 3.

L'équerre de fixation centrale 30 comporte également deux languettes 37 saillant horizontalement depuis la première paroi verticale 31 au dessus du niveau du trou oblong 36 et du même côté que la seconde paroi horizontale 32.

Réalisées par découpe et pliage de la portion de tôle constituant la première paroi verticale 31, ces languettes 37 reposent sur le dessus de la poutre 11 de sorte à empêcher toute rotation de cette équerre centrale 30 autour de l'axe longitudinal de la vis 3.

Bien que cette manière différente d'assurer l'anti-rotation de cette équerre centrale 30 limite ses possibilités de réglage vertical en imposant un écartement minimal entre le dessus de la poutre 11 et la seconde paroi horizontale 32, ce choix permet d'éviter d'avoir à affaiblir la poutre 11 dans sa portion centrale la plus sensible aux chocs frontaux en y pratiquant un trou vertical oblong.

Par ailleurs, cette équerre de fixation centrale 30 n'étant pas utilisée pour la fixation des projecteurs latéraux, cette limitation du réglage vertical n'est ici pas gênante.

Selon d'autres variantes de réalisation non représentées, le sous-ensemble structurel de pare-chocs avant 1 peut être dépourvu d'une telle équerre de fixation centrale.

## Revendications

1. Sous-ensemble structurel (1) de pare-chocs pour véhicule automobile comportant un renfort de pare-chocs (10) comprenant une poutre (11) et deux équerres de fixation latérales (20) comportant chacune une première paroi verticale (21) rapportée contre la face avant d'une portion latérale correspondante de ladite poutre (11) ainsi qu'une seconde paroi horizontale (22) s'étendant depuis le bord supérieur de ladite première paroi verticale (21) en surplomb de ladite poutre (11), ladite première paroi verticale (21) présentant un trou vertical oblong (26) positionné en regard d'un orifice circulaire respectif (14) ménagé sur une dite portion latérale correspondante de ladite poutre (11), ledit trou vertical oblong (26) et ledit orifice circulaire (14) étant traversés par une vis (2) partiellement vissée dans un écrou (15) de sorte à assurer le pré-maintien de ladite équerre de fixation latérale (20) contre ladite poutre (11) tout en permettant de laisser un certain débattement vertical de cette équerre de fixation latérale (20) avant sa fixation définitive par le vissage complet de ladite vis (2), chaque dite équerre de fixation latérale (20) comportant également un élément (27) saillant depuis ladite première paroi verticale (21) du même côté que ladite seconde paroi horizontale (22) ;
**caractérisé en ce que** ledit élément saillant (27) de chaque équerre de fixation latérale (20) traverse une lumière verticale oblongue respective (16) ménagée sur une dite portion latérale correspondante de la poutre (11) à proximité d'un dit orifice circulaire (14).

2. Sous-ensemble structurel (1) selon la revendication 1, **caractérisé en ce que** le trou vertical oblong (26) de chaque dite équerre de fixation latérale (20) et la lumière verticale oblongue (16) ménagée dans la portion latérale correspondante de ladite poutre (11) s'étendent sur une hauteur identique, ces derniers (26, 16) étant en outre configurés de sorte que l'arrivée en butée basse (respectivement haute) d'une dite vis (2) contre le bord inférieur (respectivement supérieur) dudit trou (26) corresponde à l'arrivée en butée basse (respectivement haute) dudit élément saillant (27) contre le bord inférieur (respectivement supérieur) de ladite lumière (16).

3. Sous-ensemble structurel (1) selon la revendication 2, **caractérisé en ce que** ladite hauteur est comprise entre 15 et 25 mm.

4. Sous-ensemble structurel (1) selon l'une des revendications 1 à 3, **caractérisé en ce que** ledit élément saillant est constitué par une languette (27).

5. Sous-ensemble structurel (1) selon la revendication 4, **caractérisé en ce que** ladite lumière oblongue (16) ménagée dans chaque portion latérale de ladite poutre (11) présente une largeur supérieure de 1 à 2 mm par rapport à celle de la languette (27) d'une dite équerre de fixation latérale (20).

6. Sous-ensemble structurel (1) selon l'une des revendications 4 ou 5, **caractérisé en ce que** ladite languette (27) de chaque dite équerre de fixation latérale (20) est réalisée par découpe et pliage dans sa première paroi verticale (21).

7. Sous-ensemble structurel (1) selon l'une des revendications 4 à 6, **caractérisé en ce que** ladite languette (27) et ledit trou vertical oblong (26) de chaque dite équerre de fixation latérale (20) sont décalés latéralement l'un de l'autre.

8. Sous-ensemble structurel (1) selon l'une des revendications 1 à 7, **caractérisé en ce que** la première paroi verticale (21) de chaque dite équerre de fixation latérale (20) comporte au moins une nervure de rigidification (28) s'étendant verticalement sur l'ensemble de sa hauteur.

9. Sous-ensemble structurel (1) selon l'une des revendications 1 à 8, **caractérisé en ce qu'**il comporte une équerre de fixation centrale (30) comportant une première paroi verticale (31) rapportée contre la face avant de la portion centrale de ladite poutre (11) ainsi qu'une seconde paroi horizontale (32) s'étendant depuis le bord supérieur de ladite première paroi verticale (31) en surplomb de ladite poutre (11), ladite première paroi verticale (31) de cette équerre de fixation centrale (30) présentant un trou vertical oblong (36) positionné en regard d'un orifice circulaire respectif ménagé sur la portion centrale de ladite poutre (11), ledit trou vertical oblong (36) et ledit orifice circulaire étant traversés par une vis (3) partiellement vissée dans un écrou de sorte à assurer le pré-maintien de ladite équerre de fixation centrale (30) contre ladite poutre (11) tout en permettant de laisser un certain débattement vertical de cette équerre de fixation centrale (30) avant sa fixation définitive par le vissage complet de ladite vis (3), ladite équerre de fixation centrale (30) comportant également deux languettes (37) saillant horizontalement depuis ladite première paroi verticale (31) du même côté que ladite seconde paroi horizontale (32) et reposant sur le dessus de ladite poutre (11).

10. Véhicule automobile comportant un sous-ensemble structurel de pare-chocs (1) selon l'une des revendications 1 à 9.

## Patentansprüche

1. Kraftfahrzeug- Bauuntergruppe (1) mit einer Stoßfängerverstärkung (10), die einen Balken (11) und zwei seitliche Befestigungswinkel (20) aufweist, von denen jeder eine erste vertikale Wand (21), die an der Vorderseite eines entsprechenden Seitenabschnitts des Balkens (11) angebracht ist, und eine zweite horizontale Wand (22) aufweist, die sich von der Oberkante der ersten vertikalen Wand (21) über dem Balken (11) erstreckt, wobei die erste vertikale Wand (21) ein vertikales Langloch aufweist (26), die gegenüber einer entsprechenden kreisförmigen Öffnung (14) an einem entsprechenden seitlichen Abschnitt des Balkens (11) angeordnet ist, wobei das vertikale Langloch (26) und die kreisförmige Öffnung (14) von einer Schraube (2) durchsetzt sind, die teilweise in eine Mutter (15) eingeschraubt ist, sodass der seitliche Befestigungswinkel (20) an dem Balken (11) vorgehalten wird, während gleichzeitig ein gewisses vertikales Auslenken des seitlichen Befestigungswinkels (20) vor dessen endgültiger Befestigung durch vollständiges Einschrauben der Schraube (2) ermöglicht wird, Seitenbefestigungswinkel (20), der außerdem ein Element (27) aufweist, das von der ersten vertikalen Wand (21) auf der gleichen Seite wie die zweite horizontale Wand (22) vorsteht;
das Merkmal ist, dass das vorspringende Element (27) jedes seitlichen Befestigungswinkels (20) durch ein jeweiliges längliches vertikales Lumen (16) verläuft, dass an einem entsprechenden seitlichen Abschnitt des Balkens (11) in der Nähe einer kreisförmigen Öffnung (14) ausgebildet ist.

2. Bauuntergruppe (1) nach Anspruch 1, **dadurch gekennzeichnet, dass** sich das vertikale Langloch (26) jedes seitlichen Befestigungswinkels (20) und des vertikalen Lichts (16) in dem entsprechenden seitlichen Abschnitt des Balkens (11) über eine identische Höhe erstrecken, wobei die letzteren (26, 16) ferner so konfiguriert sind, dass die niedrige (bzw. hohe) Anschlagbewegung einer Schraube (2) gegen die untere (bzw. obere) Kante des Lochs (26) der unteren (bzw. hohen) Anschlagbewegung entspricht des vorspringenden Elements (27) an der unteren (bzw. oberen) Kante der Öffnung (16).

3. Bauuntergruppe (1) nach Anspruch 2, **dadurch gekennzeichnet, dass** die Höhe zwischen 15 und 25 mm liegt.

4. Bauuntergruppe (1) nach einem der Ansprüche 1 bis 3, **dadurch gekennzeichnet, dass** das vorspringende Element durch eine Zunge (27) gebildet ist.

5. Bauuntergruppe (1) nach Anspruch 4, **dadurch gekennzeichnet, dass** das längliche Lumen (16) in jedem Seitenabschnitt des Balkens (11) eine Breite aufweist, die 1 bis 2 mm größer ist als die der Zunge (27) eines seitlichen Befestigungswinkels (20).

6. Bauuntergruppe (1) nach einem der Ansprüche 4 oder 5, **dadurch gekennzeichnet, dass** die Zunge (27) jedes seitlichen Befestigungswinkels (20) durch Schneiden und Falten in seiner ersten vertikalen Wand (21) hergestellt ist.

7. Bauuntergruppe (1) nach einem der Ansprüche 4 bis 6, **dadurch gekennzeichnet, dass** die Zunge (27) und das vertikale Langloch (26) jedes seitlichen Befestigungswinkels (20) seitlich voneinander versetzt sind.

8. Bauuntergruppe (1) nach einem der Ansprüche 1 bis 7, **dadurch gekennzeichnet, dass** die erste vertikale Wand (21) jedes seitlichen Befestigungswinkels (20) mindestens eine Versteifungsrippe (28) aufweist, die sich vertikal über ihre gesamte Höhe erstreckt.

9. Bauuntergruppe (1) nach einem der Ansprüche 1 bis 8, **dadurch gekennzeichnet, dass** sie einen zentralen Befestigungswinkel (30) aufweist, der eine erste vertikale Wand (31), die gegen die Vorderseite des zentralen Abschnitts des Balkens (11) angebracht ist, sowie eine zweite horizontale Wand (32) aufweist, die sich von der Oberkante der ersten vertikalen Wand (31) über dem Balken (11) erstreckt, wobei die erste vertikale Wand (31) dieses zentralen Befestigungswinkels (30) ein vertikales Langloch (36) aufweist gegenüber einer entsprechenden kreisförmigen Öffnung am Mittelteil des Balkens (11) angeordnet ist, wobei das vertikale Langloch (36) und die kreisförmige Öffnung von einer Schraube (3) durchsetzt sind, die teilweise in eine Mutter eingeschraubt ist, um das Vorhalten des zentralen Befestigungswinkels (30) gegen den Balken (11) zu gewährleisten, während gleichzeitig ein gewisses vertikales Auslenken des zentralen Befestigungswinkels (30) vor dessen endgültiger Befestigung durch vollständiges Einschrauben der Schraube (3) möglich ist, wobei der zentrale Befestigungswinkel (30) auch zwei vorstehende Zungen (37) aufweist Horizontal von der ersten vertikalen Wand (31) auf derselben Seite wie die zweite horizontale Wand (32) und auf der Oberseite des Balkens (11) aufliegend.

10. Kraftfahrzeug mit einer strukturellen Bauuntergruppe (1) nach einem der Ansprüche 1 bis 9.

## Claims

1. Structural subassembly (1) of a motor vehicle bumper comprising a bumper reinforcement (10) comprising a beam (11) and two lateral fixing brackets (20) each comprising a first vertical wall (21) fitted against the front face of a corresponding lateral portion of said beam (11) and a second horizontal wall (22) extending from the upper edge of said first vertical wall (21) overhanging said beam (11), said first vertical wall (21) having an oblong vertical hole (26) positioned facing a respective circular orifice (14) formed on a said corresponding lateral portion of said beam (11), said oblong vertical hole (26) and said circular orifice (14) being traversed by a screw (2) partially screwed into a nut (15) so as to ensure the pre-retention of said lateral fastening bracket (20) against said beam (11) while allowing a certain vertical movement of this lateral fastening bracket (20) before its definitive fastening by the complete screwing of said screw (2), each said lateral fastening bracket (20) also comprising an item (27) projecting from said first vertical wall (21) on the same side as said second horizontal wall (22);
wherein said projecting item (27) of each lateral fixing bracket (20) passes through a respective oblong vertical slot (16) formed on a said corresponding lateral portion of the beam (11) at the local of a said circular orifice (14).

2. Structural sub-assembly (1) according to claim 1, wherein the oblong vertical hole (26) of each said lateral fixing bracket (20) and the oblong vertical slot (16) formed in the corresponding lateral portion of said beam (11) extend over an identical height, the latter (26, 16) being further configured such that the arrival in low (or respectively high) abutment of one said screw (2) against the lower (or respectively upper) edge of said hole (26) corresponds to the arrival in low abutment (respectively) top) of said projecting item (27) against the lower (or respectively upper) edge of said slot (16).

3. Structural subassembly (1) according to claim 2, wherein said height is between 15 and 25 mm.

4. Structural subassembly (1) according to one of claims 1 to 3, **characterised in that** the said projecting item consists of a tongue (27).

5. Structural sub-assembly (1) according to claim 4, **characterised in that** the said oblong slot (16) formed in each lateral portion of the said beam (11) has a width greater by 1 to 2 mm by report than that of the tongue (27) of a said lateral fixing bracket (20).

6. Structural subassembly (1) according to either of claims 4 and 5, **characterised in that** the said tongue (27) of each of the said lateral fixing brackets (20) is realised by cutting and folding in its first vertical wall (21).

7. Structural subassembly (1) according to one of claims 4 to 6, **characterised in that** the said tongue (27) and the said oblong vertical hole (26) of each of the said lateral fixing brackets (20) are offset laterally from one another.

8. Structural subassembly (1) according to one of claims 1 to 7, **characterised in that** the first vertical wall (21) of each said lateral fixing bracket (20) comprises at least one stiffening rib (28) extending vertically over the whole of its height.

9. Structural subassembly (1) according to one of claims 1 to 8, **characterised in that** it comprises a central fixing bracket (30) comprising a first vertical wall (31) attached against the front face of the central portion of said beam (11) and a second horizontal wall (32) extending from the upper edge of said first vertical wall (31) overhanging said beam (11), said first vertical wall (31) of this central fixing bracket (30) having an oblong vertical hole (36) positioned facing it a respective circular orifice formed on the central portion of said beam (11), said oblong vertical hole (36) and said circular orifice being traversed by a screw (3) partially screwed into a nut so as to ensure the pre-holding of said central fastening bracket (30) against said beam (11) while allowing a certain vertical movement of this central fastening bracket (30) before its definitive fastening by the complete screwing of said screw (3), said central fastening bracket (30) also comprising two tongues (37) projecting horizontally from said first fastening bracket vertical wall (31) on the same side as said second horizontal wall (32) and resting on the top of said beam (11).

10. Motor vehicle comprising a structural subassembly of bumpers (1) according to one of claims 1 to 9.
